Europäisches Patentamt

European Patent Office

Office européen des brevets

(19)

(11) Veröffentlichungsnummer : **0 048 421**
**B1**

(12) **EUROPÄISCHE PATENTSCHRIFT**

(45) Veröffentlichungstag der Patentschrift :
16.11.83

(21) Anmeldenummer : **81107225.5**

(22) Anmeldetag : **14.09.81**

(51) Int. Cl.³ : **A 47 K   5/12**

(54) **Spender.**

(30) Priorität : 22.09.80 DE 3035728

(43) Veröffentlichungstag der Anmeldung :
**31.03.82 Patentblatt 82/13**

(45) Bekanntmachung des Hinweises auf die Patenterteilung : **16.11.83 Patentblatt 83/46**

(84) Benannte Vertragsstaaten :
**AT BE CH DE FR GB IT LI LU NL SE**

(56) Entgegenhaltungen :
**EP A 0 013 691**
**GB A 1 515 657**
**US A 3 361 305**

(73) Patentinhaber : **Henkel Kommanditgesellschaft auf**
**Aktien**
**Postfach 1100 Henkelstrasse 67**
**D-4000 Düsseldorf-Hoithausen (DE)**

(72) Erfinder : **Thor, Günter**
**Rather Strasse 89 A**
**D-4150 Krefeld-Traar (DE)**
Erfinder : **Stöffler, Albert**
**Nördlingerstrasse 28**
**D-4000 Düsseldorf-Benrath (DE)**
Erfinder : **Mehl, Diethof**
**Marschallstrasse 32**
**D-4000 Düsseldorf 30 (DE)**

# Spender

Die Erfindung betrifft einen Spender mit einem eine Deckfläche aufweisenden zylindrischen Behälter und einem mit dem Umfang dichtend an der Behälterinnenwandung anliegenden und beim durch Unterdruck und Atmosphärenluftdruck bewirkten Vorschub einer viskosen Behälterfüllung, wie Zahnpasta, in Richtung auf die Deckfläche folgenden Kolben sowie mit einer ein Einlaßventil an der Deckfläche, ein Spender-Auslaßventil und einen zwischen den Ventilen verbleibenden, elastisch zusammenzudrückenden, bis auf die Ventile geschlossenen Pumpenraum aufweisenden Membranpumpe.

Ein zum Abgeben von viskosen Kosmetika, wie Zahnpasta, vorgesehener Spender vorgenannter Art wird in der US-A-33 61 305 beschrieben. Der die Behälterfüllung nachschiebende Kolben des bekannten Spenders benötigt keinerlei Arretierung, z. B. Sicherungen oder Sperrklinken, gegen ein Verschieben im Sinne einer Erweiterung des Behälterinnenraums, da beim Betätigen der Membranpumpe stets entweder deren Einlaßventil oder deren Auslaßventil geschlossen ist und das Einbringen von Material in den Pumpenraum durch Unterdruck erfolgt.

Bei dem bekannten Spender sind in der zwischen Speicherraum des Behälters und Pumpenraum liegenden Deckfläche des Behälters mehrere Klappenventile im wesentlichen symmetrisch zum Zentrum der Fläche verteilt. Während die Ventilöffnungen aus Löchern bestehen, deren Fläche leicht schräg nach innen vom Rand zur Mitte der Deckfläche verläuft, sind die zugehörigen Klappen Bestandteil einer im Pumpenraum auf die Deckfläche gelegten Platte. Beim Betätigen der Membranpumpe des bekannten Spenders wird eine flexible Fläche senkrecht auf die die Klappenventile enthaltende Deckfläche zubewegt, derart, daß im Pumpenraum enthaltendes Produkt durch das Ausgangsventil des Spenders ausgestoßen wird. Bei Rückbewegung der flexiblen, elastischen Fläche wird das Auslaßventil wegen des entstehenden Unterdrucks geschlossen und die in der Deckfläche befindlichen Einlaß-Klappenventile sollen sich öffnen, derart, daß neues Produkt aus dem Behälterinnenraum in den Pumpenraum durch den dort entstehenden Unterdruck angesaugt wird.

Ein Nachteil der bekannten Anordnung besteht darin, daß die Klappen der in der Deckfläche befindlichen Ventile sowohl beim Ventilöffnen als auch beim Ventilschließen genau in der Flußrichtung bzw. gegen die Flußrichtung des aus dem Behälterinnenraum in den Pumpenraum fließenden Produktstroms zu bewegen sind. Daher erfolgt sowohl das Schließen der Einlaß-Klappenventile als auch das Öffnen dieser Ventile verzögert gegenüber der entsprechenden Hubphase der Membranpumpe, derart, daß der Pumpenraum beim Ausstoßen des Produktes nur teilweise entleert und beim Ansaugen des Produktes nur teilweise gefüllt wird. Hierdurch wird das Betätigen der Pumpe bzw. des Spenders nicht nur relativ mühsam, sondern es leidet auch die Dosiergenauigkeit.

Der Erfindung liegt die Aufgabe zugrunde, einen nach dem Prinzip des Spenders eingangs genannter Art arbeitenden Spender zu schaffen, bei dem durch Minimierung des Ventil-Widerstandes der Einlaßventile des Pumpenraums der Füllungsgrad der Membranpumpe erhöht und damit die Dosiergenauigkeit der Pumpe bzw. des Spenders verbessert wird. Die erfindungsgemäße Lösung besteht bei dem Spender mit einer ein Einlaßventil in der Deckfläche des Behälters aufweisenden Membranpumpe darin, daß das Einlaßventil aus einem in der Deckfläche kreisförmig symmetrisch zur Behälterachse verlaufenden Ringschlitz mit einem im Pumpenraum elastisch unter Vorspannung dichtend vor den Schlitz gehaltenen Abdeckring besteht und daß der Abdeckring an mindestens drei, zu einer axial in Bezug auf den Behälter an der Deckfläche befestigten, zentralen Nabe führenden Speichen gehalten ist. Vorzugsweise sollen alle Speichen in gleichem Sinne auf einer von der radialen (in Bezug auf die Nabenachse) abweichenden gebogenen bzw. geschwungenen Linie von der Nabe zum Abdeckring verlaufen. Die Speichen können in etwa (Halb-) Kreislinien folgen, deren Durchmesser grössenordnungsmäßig dem Radius der lichten Weite des kreisförmigen Abdeckrings entspricht.

Der kreisförmige Abdeckring wird mit Hilfe der geschwungenen Speichen unter ständiger mechanischer Vorspannung gegen den Ringschlitz des fraglichen Ventils gehalten. Dadurch wird wegen der Vorspannung ein fast augenblicklich dem Zyklus der Membranpumpe folgendes Schließen des Klappenventils am Eingang des Pumpenraums erreicht, während gleichzeitig die den Abdeckring mit dessen Nabe und damit Befestigungsstelle verbindenden Speichen einer auf ein Öffnen des Ventils gerichteten Kraft einen nennenswerten Widerstand nicht entgegensetzen können. Das Öffnen des erfindungsgemäßen Ventils folgt daher ebenfalls fast augenblicklich der entsprechenden Pumpenphase. Das gilt insbesondere dann, wenn die Speichen nicht radial von der Nabe zum Kreisring verlaufen sondern — in etwa wie die Flügel eines Wasserrades gleichsinnig gebogen — auf geschwungenen Linien von der Nabe zur Innenkante des Kreisrings führen, weil dann der den Kreisring bei Ausübung einer Kraft in Öffnungsrichtung auch eine Bewegungskomponente in Umfangrichtung der Nabe und damit der Befestigungsstelle erfährt, so daß schon aus diesem Grunde der Ring beim Abheben von der Ventilöffnung auf im Pumpenraum verbliebenes Material eine kombinierte Schub- und Scherkraft ausübt und daher dem jeweiligen Pumpenzyklus mit geringerer Verzögerung folgen kann als ohne die Scherkomponente.

Der in der Deckfläche erfindungsgemäß vorgesehene Ringschlitz des Eingangsventils des Pumpenraums kann von einigen, z. B. drei, die Ringfläche nicht nennenswert verkleinernden Rippen unterbrochen sein, welche als Befestigung des den Ringschlitz an seinem Innenrand begrenzenden Mittelteils der Deckfläche dienen. Mit diesem Mittelteil soll auch die Nabe des Abdeckrings gekoppelt, insbesondere vernietet, sein. Gemäß einer weiteren Ausführungsart des Erfindung läßt sich der Abdeckring dadurch mit Vorspannung auf den Rand des Ringschlitzes des Eingangsventils des Pumpenraums drücken, daß die Nabe wegen der Form des aus Nabe, Speichen und Abdeckring bestehenden Systems nur unter Ausübung einer Vorspannung an der vorgesehenen Stelle des Mittelteils der Deckfläche zu befestigen ist.

Gemäß noch einer weiteren Ausführungsart der Erfindung wird die als Ringschlitz ausgebildete Öffnung des vom Behälterinnern zum Pumpenraum führenden Eingangs-Klappenventils so aus der radial zur Behälterachse verlaufenden Ebene herausgeneigt, daß der Ringschlitz in einem parallel zur Behälterlängsachse verlaufenden Querschnitt ausgehend vom Mittelteil der Deckfläche relativ stark schräg, insbesondere mit etwa 45 bis 85° gegen die Radiale, zum Innern des Pumpenraums steht. Die Fläche des Ringschlitzes hat also die Form eines sich in Richtung auf den Pumpenraum erweiternden Pyramidenstumpfes bzw. Trichters. Entsprechend wird zweckmäßig der Abdeckring in etwa parallel zur Fläche des Ringschlitzes ausgerichtet an die äußeren Enden der Speichen angesetzt bzw. angeformt. Der Abdeckring soll dabei mit je einer umlaufenden Dichtlippe innerhalb und außerhalb des Ringschlitzes an der Deckfläche dort dichtend anliegen, wo die Deckfläche in vorgenannter Weise konisch (in Bezug auf die Behälterachse), d. h. im wesentlichen parallel zur Ringfläche, verläuft. Dadurch wird erreicht, daß sowohl das Öffnen als auch das Schließen des fraglichen Schlitzventils noch mehr als ohnehin durch den Einfluß der Speichenbiegung durch Scherwirkung auf das beim Öffnen vor dem Ventil wegzuschiebende bzw. beim Schließen zurückzuhaltende Material erfolgt.

Ersichtlich ist der erfindungsgemäße Spender nur dann voll funktionsfähig, wenn die Einzelteile mit höchster Genauigkeit herzustellen sind. Beispielsweise setzt ein einwandfreier Lauf des zum Nachführen des Behälterinhalts vorgesehenen Kolbens voraus, daß die Innenwandung des Behälters die vorgeschriebene Zylinderform aufweist. Für einen ausreichenden Füllungsgrad des Pumpenraums müssen die Einzelteile der Ventile die gewünschten, symmetrischen Formen haben. Wenn ferner der Spender als Massenprodukt mit möglichst geringem Aufwand praktisch vollständig automatisch herzustellen ist, kommt bei der Produktion der Einzelteile aus Kunststoff praktisch nur Spritzgießen in Frage. Dieses Verfahren führt aber nur dann zu homogenen, kreissymmetrischen und die Vorgabemaße ohne jede Verbiegung exakt ausfüllenden Gußteilen, wenn von einem zentral-symmetrisch gelegenen Punkt aus zu spritzen ist.

Gerade betreffend das Spritzgießen besteht ein besonderer Vorteil des erfindungsgemäßen Spenders darin, daß der Behälter einschließlich Deckfläche als ein einziges Bauteil vom Mittelpunkt der Deckfläche aus, also von einem zentralen Punkt her, zu spritzen ist. Als besonders vorteilhaft kommt hinzu, daß der im Mittelteil der Deckfläche vorgesehene bzw. verbleibende Gußansatz zum Vernieten oder sonstigen Verbinden des Mittelteils mit der Nabe des erfindungsgemäßen Abdeckrings zur benutzen ist. Eine oft nur mit unverhältnismäßigem Aufwand zu beseitigende Angußnarbe bzw. ein entsprechendes Angußstück sind bei dem erfindungsgemäßen Spender daher unbeachtlich, weil die Angußstelle ohnehin für die weitere Montage zu benutzen ist.

Anhand der schematischen Darstellung eines Ausführungsbeispiels werden weitere Einzelheiten der Erfindung erläutert. Es zeigen :

Figur 1 einen Querschnitt durch einen Spender ;

Figur 2 einen vergrößerten Querschnitt durch die Deckfläche mit dem Einlaßventil des Pumpenraums ; und

Figur 3 eine Draufsicht in Behälterlängsrichtung auf den Abdeckring mit Speichen und Nabe.

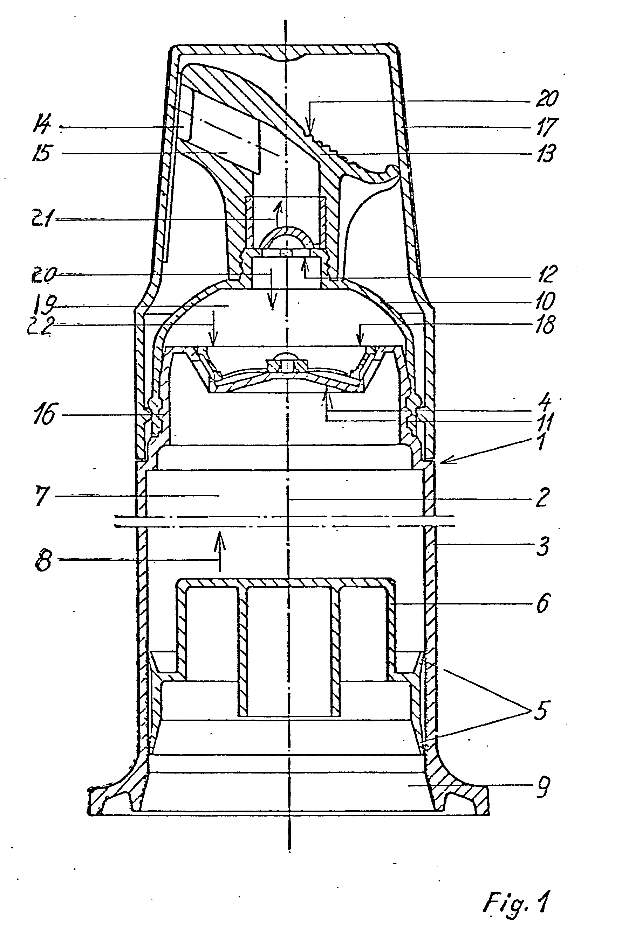

Fig. 1 zeigt einen insgesamt mit 1 bezeichneten Spender im Schnitt parallel zur Längsachse 2. Der Spender 1 besteht aus einem zylindrischen Behälter 3 mit angeformter, insgesamt mit 4 bezeichneter Deckfläche. Im Behälter 3 ist ein dichtend an der zylindrischen Behälterinnenwandung, z. B. mit Dichtlippen 5, anliegender Kolben 6 in Richtung der Längsachse 2 verschiebbar angeordnet. Der Kolben 6 ist dazu vorgesehen, im Behälterinnern 7 befindliches Produkt in Pfeilrichtung 8 von der Einfüllseite 9 des Behälters 3 zu der Deckfläche 4 zu schieben bzw. dem Produkt dichtend nachgeführt zu werden.

Im Ausführungsbeispiel ist oberhalb der Deckfläche 4 ein flexibler, elastischer Dom 10, z. B. durch Aufprellen oder Aufschrauben, mittels der Rippen 11 befestigt. Der Dom 10 besitzt an seinem oberen Ende ein insgesamt mit 12 bezeichnetes Spender-Auslaßventil, auf das ein Mundstück 13 mit Deckel 14 in der Auslaßöffnung 15 aufzusetzen ist. Der ganze aus dem die Deckfläche 4 aufnehmenden Oberteil 16 des Behälters 3, dem Dom 10 und dem Mundstück 13 bestehende Kopf des Spenders 1 kann mit einem, insbesondere aufzuprellenden, Stülpdeckel 17 zu schützen sein.

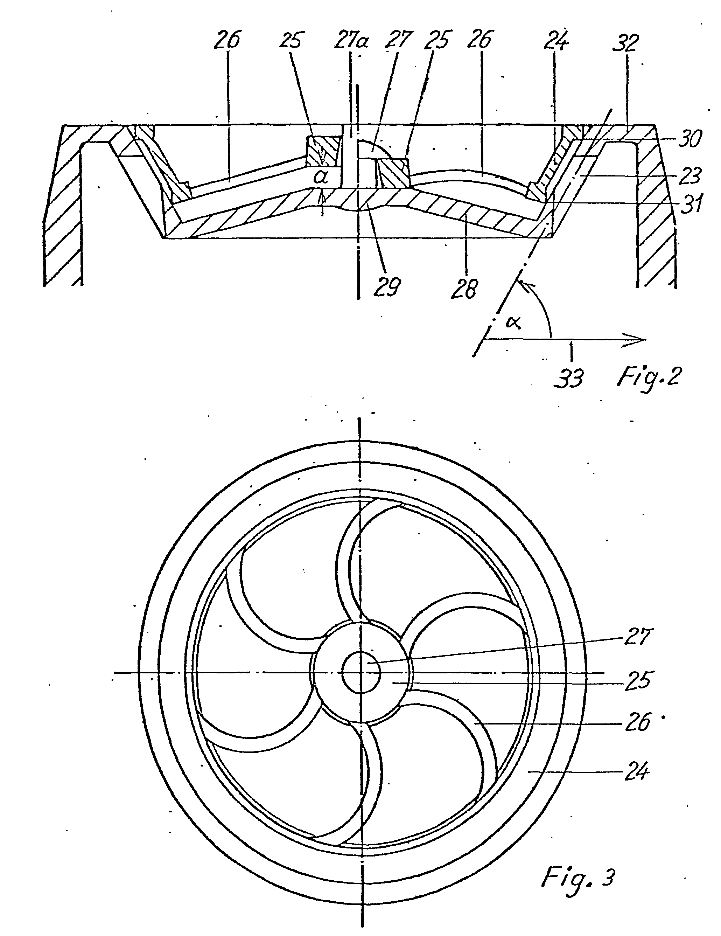

Die Membranpumpe des Spenders 1 wird durch ein anhand der Fig. 2 und 3 näher erläutertes und in Fig. 1 insgesamt mit 18 bezeichnetes Einlaßventil, den Pumpenraum 19 und das Auslaßventil 12 gebildet. Die Ventile 12 und 18 sind so ausgebildet, daß bei Eindrücken des Doms 10 in Pfeilrichtung 20, z. B. durch Herunterpressen des Mundstücks 13, das Ventil 12 in Pfeilrichtung 21 geöffnet und das Ventil 18 in Pfeilrichtung 22 geschlossen wird. Beim anschließenden Entlasten des Doms 10 bildet dieser seine ursprüngliche Form elastisch zurück. Durch den entsprechenden Unterdruck im Pumpenraum 19 werden das Ventil 12 in umgekehrter Pfeilrichtung 21 geschlossen und das Ventil 18 in umgekehrter Pfeilrichtung 22 geöffnet. Der im Pumpenraum 19 sich aufbauende Unterdruck kann also nur durch Nachführen von Material aus dem Behälterinnern 7 ausgeglichen werden. Im Ergebnis wird daher bei Nachlassen einer auf den Dom 10 ausgeübten Kraft aus dem Behälterinnern 7 Produkt in den Pumpenraum 19 gesaugt. Dieses kann dann beim nächsten Hub bzw. Zusammendrücken der Membranpumpe bei Schließen des Einlaßventils 18 und Öffnen des Auslaßventils 12 über das Mundstück 13 und dessen Auslaßöffnung 15 ausgestoßen werden. In dem Maße, wie Produkt aus dem Behälterinnern in den Pumpenraum 19 gesaugt wird, erfolgt natürlich ein Nachziehen (oder Nachschieben durch den äußeren Luftdruck) des Kolbens 6.

Erfindungsgemäß besteht das anhand der Fig. 2 und 3 näher erläuterte Einlaßventil 18 aus einem in der Deckfläche 4 kreisförmig symmetrisch zur Behälter- bzw. Längsachse 2 verlaufenden Ringschlitz 23 mit einem im Pumpenraum 19 elastisch unter Vorspannung dichtend vor den Schlitz 23 gehaltenen kreisförmigen Abdeckring 24. Der Abdeckring 24 wird an mindestens drei, zu einer axial in Bezug auf den Behälter 3 an der Deckfläche 4 zu befestigenden Nabe 25 führenden Speichen 26 gehalten. Alle Speichen 26 sollen in etwa gleicher Weise auf einer von der jeweiligen (in Bezug auf die Längsachse 2) radialen Linie gleichsinnig abweichenden geschwungenen bzw. gebogenen Linie von der Nabe 25 zur Innenkante des Abdeckrings 24 verlaufen.

Die Nabe 25 kann mit Hilfe eines Niets 27 oder eines anderen Kupplungsmittels am Mittelteil 28 der Deckfläche 4 befestigt sein. Die Befestigung der Nabe 25 im Zentrum des Mittelteils 28 der Deckfläche 4 ist besonders günstig, da dieser Punkt zweckmäßig als Angußstelle 29 zum Spritzgießen des zweckmäßig einteilig zusammen mit der Deckfläche 4 durch Spritzgießen hergestellten Behälters 3 zu verwenden ist. Erfindungsgemäß soll der Abdeckring 24 mit gewisser Vorspannung gegen den Ringschlitz 23 der Deckfläche 4 gehalten werden. Diese Vorspannung kann vorteilhaft dadurch erzeugt werden, daß das aus Abdeckring 24, Speichen 26 und Nabe 25 bestehende radartige System beim Annieten um einen gewissen Betrag zu verformen ist, wie das durch die unterschiedlichen Darstellungen der Speichen 26, der Nabe 25 und des Niets 27/27 a auf der linken und rechten Seite von Fig. 2 im Prinzip angedeutet wird. In der Praxis würde der Abdeckring 24 mit den Dichtlippen 30 und 31 bereits fest an den Rand- bzw. Kantenbereichen des Ringschlitzes 23 auf der Deckfläche 4 anliegen, wenn die Nabe 25 noch um einen gewissen Betrag a, von z. B. 1 mm bei einem Gesamtdurchmesser des Abdeckrings 24 von etwa 25 mm, über dem Zentralbereich bzw. der Angußstelle 29 des Mittelteils 28 der Deckfläche 4 schiebt.

Zu beachten ist, daß der Ringschlitz 23 von einigen, insbesondere drei, die Ringfläche nicht nennenswert verkleinernden (nicht gezeichneten) Rippen unterbrochen wird, die den äußeren Rand 32 der Deckfläche 4 mit deren Mittelteil 28 verbinden. Ein besonderer Vorteil des erfindungsgemäßen Spenders wird erreicht, wenn der Ringschlitz 23 in dem parallel zur Behälter-Längsachse 2 verlaufenden Querschnitt ausgehend vom Mittelteil 28 der Deckfläche 4 schräg, insbesondere mit einem Winkel von etwa 45° bis 75° gegen die radiale Richtung, zum Innern des Pumpenraums 19 hin geneigt ist. Durch diese Schräglage, der der Abdeckring 24 natürlich anzupassen ist, und dadurch, daß letzterer mit je einer umlaufenden Dichtlippe 30, 31 innerhalb und außerhalb des Ringschlitzes 23 an der Deckfläche 4 dort dichtend anliegt, wo die Deckfläche konisch, d. h. im wesentlichen parallel zur trichterförmigen Fläche des Ringschlitzes, verläuft, wird erreicht, daß sowohl beim Öffnen als auch beim Schließen des fraglichen Einlaßventils 18 des Pumpenraums 19 die zwischen dem jeweils zu verdrängenden Material im Behälterinnern 7 oder im Pumpenraum 19 einerseits und dem Abdeckring 24 andererseits wirkende Kraft, zu einem wesentlichen Teil durch Scherwirkung zu überwinden ist. Die Scherkraftkomponente besteht wiederum aus zwei Einzelkomponenten, nämlich derjenigen in Umfangsrichtung der Nabe 25 und einer weiteren, die in etwa in Richtung des Neigungswinkels des Ringschlitzes 23 bzw. des Abdeckrings 24 verläuft. Diese Scherkraftkomponente erstens rührt daher, daß der Abdeckring an keiner Stelle flächig auf den Rand oder die Kante des Ringschlitzes zu drücken ist, sondern überall nur längs der linienförmigen Dichtlippen zu verschließen hat und zweitens daher, daß die Dichtlippen 30, 31 in vorgenannter Weise konisch oder schräg übereinander liegen. Das Abklemmen eines vom Behälterinnern 7 zum Pumpenraum 19 laufenden Materialstrom-s beim Verschließen des Ventils 18 erfolgt daher durch Abscheren dieses Stroms mittels der Dichtlippen 30 und 31.

Der Behälter 3 mit angeformter Deckfläche 4 kann aus einem üblichen Spritzguß-Kunststoff bestehen. Er hat in einem Ausführungsbeispiel in seinem zylindrischen Teil einen Innendurchmesser von etwa 35 mm und eine Länge von etwa 110 mm. Seine Wandstärke kann in der Größenordnung von 0,8 mm liegen. Der Ringschlitz 23 hat in dem Ausführungsbeispiel eine kleinste Weite von etwa 2 mm. Der Abdeckring 24 mit Nabe 25 und Speichen 26 besteht im Ausführungsbeispiel aus hartgestelltem Polypropylen. Die gebogenen Speichen haben etwa quadratischen Querschnitt mit ungefähr 0,2 bis 0,4 mm Kantenlänge. Der die elastische Fläche der Membranpumpe bildende Dom 10 soll vorzugsweise aus thermoplastischem Polyester-Elastomer bestehen.

## Ansprüche

1. Spender mit einem eine Deckfläche (4) aufweisenden zylindrischen Behälter (3) und einem mit dem Umfang dichtend an der Behälterinnenwandung anliegenden und beim durch Unterdruck und Atmosphärenluftdruck bewirkten Vorschub einer viskosen Behälterfüllung, wie Zahnpasta, in Richtung auf die Deckfläche (4) folgenden Kolben (6) sowie mit einer ein Einlaßventil (18) in der Deckfläche, ein Spender-Auslaßventil (12) und einen zwischen den Ventilen (12, 18) verbleibenden, elastisch zusammenzudrückenden, bis auf die Ventile (12, 18) geschlossenen Pumpenraum aufweisenden Membranpumpe, dadurch gekennzeichnet, daß das Einlaßventil (18) aus einem in der Deckfläche (4) kreisförmig symmetrisch zur Behälterachse (2) verlaufenden Ringschlitz (23) mit einem im Pumpenraum (19) elastisch unter Vorspannung dichtend vor den Schlitz (23) gehaltenen kreisförmigen Abdeckring (24) besteht und daß der Abdeckring (24) an mindestens drei, zu einer axial in Bezug auf den Behälter (3) an der Deckfläche (4) befestigten, zentralen Nabe (25) führenden Speichen (26) gehalten ist.

2. Spender nach Anspruch 1, dadurch gekennzeichnet, daß alle Speichen (26) in gleichem Sinne auf einer von der radialen Richtung abweichenden gebogenen Linie von der Nabe (25) zum Abdeckring (24) verlaufen.

3. Spender nach Anspruch 1 oder 2, dadurch gekennzeichnet, daß die Nabe (25) mit einem in der Behälterachse (2) verlaufenden Niet (27) mit dem Mittelteil (28) der Deckfläche (4) verbunden ist.

4. Spender nach einem oder mehreren der Ansprüche 1 bis 3, dadurch gekennzeichnet, daß die Nabe (25) beim Befestigen an der Deckfläche (24) unter Ausübung einer Biegekraft auf das aus Speichen (26) und Nabe (25) bestehende System gegen die Deckfläche (4) bzw. den Ringschlitz (23) gedrückt ist.

5. Spender nach einem oder mehreren der Ansprüche 1 bis 4, dadurch gekennzeichnet, daß der Ringschlitz (23) von einigen, insbesondere drei, die Ringfläche nicht nennenswert verkleinernden Rippen unterbrochen ist, die den äußeren Rand bzw. Bereich (32) der Deckfläche (4) mit derem mit der Nabe (25) zu koppelnden Mittelteil (28) verbinden.

6. Spender nach einem oder mehreren der Ansprüche 1 bis 5, dadurch gekennzeichnet, daß der Ringschlitz (23) in einem parallel zur Behälterlängsachse (2) verlaufenden Querschnitt ausgehend vom Mittelteil (28) der Deckfläche (4) schräg, insbesondere mit etwa 45° bis 75° gegen die radiale Richtung, zum Innern des Pumpenraums (19) hin geneigt ist.

7. Spender nach Anspruch 6, dadurch gekennzeichnet, daß der Abdeckring (24) in etwa parallel zur Fläche des Ringschlitzes (23) ausgerichtet an die äußeren Enden der Speichen (26) angesetzt bzw. angeformt ist.

8. Spender nach einem oder mehreren der Ansprüche 1 bis 7, dadurch gekennzeichnet, daß der Abdeckring (24) mit je einer umlaufenden Dichtlippe (30, 31) innerhalb und außerhalb des Ringschlitzes (23) an der Deckfläche (4) dort dichtend anliegt, wo die Deckfläche konisch, d. h. im wesentlichen parallel zur trichterförmigen Ringfläche, verläuft.

9. Spender nach einem oder mehreren der Ansprüche 1 bis 8, dadurch gekennzeichnet, daß die Verbindungsstelle zwischen der Nabe (25) und dem Deckflächen-Mittelteil (28) die zum Spritzgießen des Behälters (3) verwendete zentrale Angußstelle (29) ist.

**Claims**

1. Dispenser with a cylindrical container (3) displaying a cover surface (4) and a piston (6), which by the circumference is lying closely against the inside wall of the container and is following up in direction of the cover surface (4) on the advance — effected by underpressure and atmospheric air pressure — of a viscous container filling such as toothpaste, as well as with a diaphragm pump displaying an inlet valve (18) in the cover surface, a dispenser outlet valve (12) and an elastically compressing pump chamber remaining between the valves (12, 18) and being closed except for the valves (12, 18), characterised thereby, that the inlet valve (18) consists of an annular slot (23), which extends in the cover surface (4) circularly symmetrically to the container axis (2), with a circular cover ring (24) retained in the pump chamber (19) elastically biassed sealingly in front of the slot (23) and that the cover ring (24) is retained at at least three spokes (26) leading to a central hub (25) fastened at the cover surface (4) axially with respect to the container (3).

2. Dispenser according to claim 1, characterised thereby, that all spokes (26) extend from the hub (25) to the cover ring (24) in like sense on a bent line deviating from the radial direction.

3. Dispenser according to claim 1 or 2, characterised thereby, that the hub (25) is connected by a rivet (27) extending in the container axis (2) with the middle part (28) of the cover surface (4).

4. Dispenser according to one or more of the claims 1 to 3, characterised thereby, that the hub (25) during the fastening to the cover surface (4) is pressed against the cover surface (4) or the annular slot (23) under the exertion of a bending force on the system consisting of spokes (26) and hub (25).

5. Dispenser according to one or more of the claims 1 to 4, characterised thereby, that the annular slot (23) is interrupted by some, particularly three ribs which do not noteworthily reduce the annular area and connect the outer rim or region (32) of the cover surface (4) with their middle part (28) to be coupled with the hub (25).

6. Dispenser according to one or more of the claims 1 to 5, characterised thereby, that the annular slot (23) is inclined obliquely, particularly by about 45° to 75° relative to the radial direction, towards the interior of the pump chamber (19) in a cross-section starting from the middle part (28) of the cover surface (4) and extending parallelly to the longitudinal axis (2) of the container.

7. Dispenser according to claim 6, characterised thereby, that the cover ring (24) is placed against or moulded onto the outer ends of the spokes (26) and aligned about parallelly to the area of the annular slot (23).

8. Dispenser according to one or more of the claims 1 to 7, characterised thereby, that the cover ring (24) by a respective encircling sealing lip (30, 31) inside and outside the annular slot (23) sealingly lies against the cover surface (4) there, where the cover surface extends conically, i. e. substantially parallel to the funnel-shaped ring area.

9. Dispenser according to one or more of the claims 1 to 8, characterised thereby, that the connecting place between the hub (25) and the middle part (28) of the cover surface is the central sprue place (29) employed for the injection moulding of the container (3).

**Revendications**

1. Distributeur muni d'un récipient cylindrique (3) présentant une surface de recouvrement (4) et d'un piston (6) s'appliquant de façon étanche par sa circonférence contre la paroi intérieure du récipient et qui suit le mouvement en direction de la surface de recouvrement (4) lors de l'avancement d'un contenu visqueux tel que de la pâte dentifrice, provoqué par dépression et par la pression atmosphérique, ainsi que d'une pompe à diaphragme présentant une valve d'entrée (18) dans la surface de recouvrement, une valve de sortie de distributeur (12) et une cavité de pompe ménagée entre les valves (12, 18), pouvant .être comprimée élastiquement et fermée à l'exception des valves (12, 18), distributeur caractérisé par le fait que la valve d'entrée (18) est constituée d'une fente annulaire (23) présentant une allure circulaire dans la surface de recouvrement (4), symétriquement autour de l'axe (2) du récipient et d'un anneau circulaire de recouvrement (24) maintenu élastiquement sous une précharge et de façon étanche devant la fente (23), dans la cavité de pompe (19), et que l'anneau de recouvrement (24) est maintenu par au moins trois rayons (26) conduisant à un moyeu central (25) fixé à la surface de recouvrement (4), axialement par rapport au récipient (3).

2. Distributeur selon la revendication 1, caractérisé par le fait que tous les rayons (26) se dirigent dans le même sens, du moyeu (25) à l'anneau de recouvrement (24), sur une ligne courbe s'écartant de la direction radiale.

3. Distributeur selon l'une ou l'autre des revendications 1 ou 2, caractérisé par le fait que le moyeu (25) est relié à la partie centrale (28) de la surface de recouvrement (4) par un rivet (27) situé dans l'axe (2) du récipient.

4. Distributeur selon l'une quelconque des revendications 1 à 3, caractérisé par le fait que le moyeu (25), lors de la fixation à la surface de recouvrement (24), a été poussé contre la surface de recouvrement (4) ou la fente annulaire (23), une force de flexion étant exercée sur le système formé des rayons (26) et du moyeu (25).

5. Distributeur selon l'une quelconque des revendications 1 à 4, caractérisé par le fait que la fente annulaire (23) est interrompue par quelques nervures, en particulier trois, ne diminuant pas notablement la surface annulaire et qui relient le bord extérieur ou la région extérieure (32) de la surface de recouvrement (4) à la partie centrale (28) de celle-ci, destinée à s'accoupler au moyeu (25).

6. Distributeur selon l'une quelconque des revendications 1 à 5, caractérisé par le fait que la fente annulaire (23), dans une section dirigée parallèlement à l'axe longitudinal (2) du récipient, est inclinée obliquement, en particulier en faisant un angle d'environ 45 à 75° avec la direction radiale, en partant de la partie centrale (28) de la surface de recouvrement (4), vers l'intérieur de la cavité de pompe (19).

7. Distributeur selon la revendication 6, caractérisé par le fait que l'anneau de recouvrement (24) est adjoint aux extrémités extérieures des rayons (26) ou formé solidairement de celles-ci et aligné à peu près parallèlement à la surface de la fente annulaire (23).

8. Distributeur selon l'une quelconque des revendications 1 à 7, caractérisé par le fait que l'anneau de recouvrement (24) s'applique de façon étanche à la surface de recouvrement (4), par une lèvre d'étanchéité circonférentielle respective (30, 31), à l'intérieur et à l'extérieur de la fente annulaire (23), là où la surface de recouvrement a une allure conique, c'est-à-dire pratiquement parallèle à la surface annulaire en entonnoir.

9. Distributeur selon l'une quelconque des revendications 1 à 8, caractérisé par le fait que le point de liaison entre le moyeu (25) et la partie centrale (28) de la surface de recouvrement est le culot central (29) utilisé pour le moulage par injection du récipient (3).

*Fig. 1*

Fig. 2

Fig. 3